# EUROPEAN PATENT APPLICATION

(11) **EP 4 560 721 A1**
(43) Date of publication of application: **28.05.2025**
(21) Application number: 23915779.5
(22) Date of filing: 18.12.2023
(51) Int. Cl.: H01M 4/13, H01M 4/66, H01M 10/0525, H01M 4/505

(54) **BATTERY CELL, BATTERY, AND ELECTRIC DEVICE**

(30) Priority: 09.01.2023 CN 202310029643
(71) Applicant: Contemporary Amperex Technology (Hong Kong) Limited, Hong Kong (HK)
(72) Inventor: QIN, Yiming, Ningde, Fujian 352100 (CN); SUN, Jingxuan, Ningde, Fujian 352100 (CN); XU, Xiaofu, Ningde, Fujian 352100 (CN); SHANG, Yibo, Ningde, Fujian 352100 (CN); PAN, Jianfu, Ningde, Fujian 352100 (CN); LIU, Qian, Ningde, Fujian 352100 (CN); YE, Yonghuang, Ningde, Fujian 352100 (CN)
(74) Representative: Kraus & Lederer PartGmbB
(86) International application number: PCT/CN2023/139407
(87) International publication number: WO 2024/149025

(57) **Abstract**

A battery cell, a battery, and an electrical device are disclosed. The battery cell includes: a first positive electrode plate, where the first positive electrode plate includes a first positive active layer, the first positive active layer includes a first positive electrode material, and the first positive electrode material includes a ternary material; a second positive electrode plate, where the second positive electrode plate includes a second positive active layer, the second positive active layer includes a second positive electrode material, and the second positive electrode material includes a lithium-containing phosphate; and a negative electrode plate, where the negative electrode plate and the positive electrode plate are stacked up.

## Description

### TECHNICAL FIELD

This application relates to the field of battery technology, and in particular, to a battery cell, a battery, and an electrical device.

### BACKGROUND

When a ternary material is mixed with a lithium manganese material, various processing problems such as gelation, filter cartridge blockage, and particle dispersion nonuniformity occur due to different operating voltages and material properties of the two materials, thereby impairing the energy density and service life of the battery cell.

Therefore, currently, the battery cell still needs to be further improved.

### SUMMARY

This application aims to solve one of the technical problems in the related art at least to some extent.

According to an aspect of this application, a battery cell is disclosed. The battery cell includes a positive electrode plate. The positive electrode plate includes: a first positive electrode plate, where the first positive electrode plate includes a first positive active layer, the first positive active layer includes a first positive electrode material, and the first positive electrode material includes a ternary material; a second positive electrode plate, where the second positive electrode plate includes a second positive active layer, the second positive active layer includes a second positive electrode material, and the second positive electrode material includes a lithium-containing phosphate; and a negative electrode plate, where the negative electrode plate and the positive electrode plate are stacked up. In this way, the battery cell includes both the ternary material and the lithium-containing phosphate as positive electrode materials. The two positive electrode materials serve as active materials of independent positive electrode plates respectively, and are then combined with the negative electrode plate to form a battery cell, thereby avoiding the processing problems caused by the direct mixing of the first positive electrode material and the second positive electrode material, prolonging the cycle life of the battery cell, and increasing the energy density of the battery cell.

According to some embodiments of this application, the number of the first positive electrode plates is x₁, the number of the second positive electrode plates is x₂, a gravimetric capacity of each first positive electrode plate is a mA-h/g, and a gravimetric capacity of each second positive electrode plate is b mA·h/g, satisfying: 0.5 ≤ (b/a)² + x₁/(x₁ + x₂) ≤ 1.6.

According to some embodiments of this application, 0.01 ≤ x₁/x₂ ≤ 100.

According to some embodiments of this application, 150 mA-h/g ≤ a ≤ 230 mA·h/g, and 100 mA·h/g ≤ b ≤ 160 mA·h/g.

According to some embodiments of this application, a coating areal density of the first positive electrode material on the first positive electrode plate is 80 g/m² to 600 g/m²; and/or, a coating areal density of the second positive electrode material on the second positive electrode plate is 80 g/m² to 600 g/m².

According to some embodiments of this application, a compaction density of the first positive electrode plate is 2.0 g/cm³ to 4.3 g/cm³; and/or, a compaction density of the second positive electrode plate is 2.0 g/cm³ to 4.3 g/cm³.

According to some embodiments of this application, the second positive electrode plate is disposed on an outermost layer of the battery cell.

According to some embodiments of this application, the lithium-containing phosphate includes Liₐ₁A_{b1}MP_{1-c1}C_{c1}O_{4-d1}D_{d1}, where A includes one or more of Group IA elements; M includes at least one of a Group VIIB element or a doping element of the Group VIIB element; C includes one or more of a Group IIIA element, a Group IVA element, a Group VA element, or a Group VIA element; D includes one or more of a Group VIA element or a Group VIIA element; a₁ is selected from 0.9 to 1.1; b₁ is selected from 0 to 0.1; c₁ is selected from 0 to 0.1; and d₁ is selected from 0 to 0.1.

According to some embodiments of this application, the lithium-containing phosphate includes Liₐ₁A_{b1}Mn₁₋ₑ₁Eₑ₁P_{1-c1}C_{c1}O_{4-d1}D_{d1}, where A includes one or more of Zn, Al, Na, K, Mg, Nb, Mo, or W; E includes one or more of Zn, Al, Na, K, Mg, Mo, W, Ti, V, Zr, Fe, Ni, Mg, Co, Ga, Sn, Sb, Nb, or Ge; C includes one or more of B (boron), S, Si, or N; D includes one or more of S, F, Cl, or Br; a₁ is any value selected from 0.9 to 1.1; b₁ is any value selected from 0 to 0.100; c₁ is any value selected from 0.001 to 0.100; d₁ is any value selected from 0.001 to 0.1; and e₁ is any value selected from 0.001 to 0.5.

According to some embodiments of this application, the lithium-containing phosphate includes Li₁₊ₓMn₁₋ₑ₁Eₑ₁P_{1-c1}C_{c1}O₄, where 1 + x = a₁, x is any value of -0.100 to 0.100; e₁ is any value of 0.001 to 0.500; c₁ is any value of 0.001 to 0.100; E includes one or more selected from Zn, Al, Na, K, Mg, Mo, W, Ti, V, Zr, Fe, Ni, Mg, Co, Ga, Sn, Sb, Nb, or Ge; and C includes one or more selected from B (boron), S, Si, or N.

According to some embodiments of this application, the second positive electrode material includes a core and a shell that covers at least a part of a surface of the core, and the core includes the lithium-containing phosphate.

According to some embodiments of this application, the ternary material is Liₐ₂Ni_{b2}Co_{c2}M1ₐ₂M2ₑ₂O_{f2}R'_{g2}, where: 0.75 ≤ a2 ≤ 1.2, 0 < b2 < 1, 0 < c2 < 1, 0 < d2 < 1, 0 ≤ e2 ≤ 0.2, 1 ≤ f2 ≤ 2.5, 0 ≤ g2 ≤ 1, f2 + g2 ≤ 3; M1 includes Mn and/or Al; M2 includes at least one of Zr, Zn, Cu, Cr, Mg, Fe, V, Ti, Sr, Sb, Y, W, or Nb; and R' includes at least one of N, F, S, or Cl.

According to some embodiments of this application, the ternary material includes at least one of lithium nickel cobalt aluminum oxide or lithium nickel cobalt manganese oxide.

According to some embodiments of this application, based on a total mass of the first positive electrode plate, mass percentages of Ni and Co are: Ni: 30% to 99.5%; and Co: 3% to 49.5%.

According to some embodiments of this application, the ternary material is a single crystal, and particle diameters of the single crystal are: 0.2 µm < Dᵥ₅₀ ≤ 10 µm, and Dᵥ₉₉ ≤ 18 µm.

According to some embodiments of this application, the ternary material is a secondary particle formed by agglomerating primary particles, a particle diameter of the primary particles is 50 nm to 800 nm, and particle diameters of the secondary particles are: 4 µm ≤ Dᵥ₅₀ ≤ 13 µm, and Dᵥ₉₉ ≤ 30 µm.

According to some embodiments of this application, a BET specific surface area of the ternary material is 0.4 m²/g to 1.5 m²/g.

According to some embodiments of this application, the second positive electrode material is a single crystal, and a particle diameter of the second positive electrode material is 50 nm to 1000 nm.

According to some embodiments of this application, the second positive electrode material is a secondary particle formed by agglomerating primary particles, and particle diameters of the secondary particles are: 0.8 µm ≤ Dᵥ₅₀ ≤ 4.2 µm, and Dᵥ₉₉ ≤ 30 µm.

According to some embodiments of this application, a BET specific surface area of the second positive electrode material is 8 m²/g to 20 m²/g.

According to another aspect of this application, a battery is disclosed. The battery includes the battery cell disclosed above. In this way, the battery possesses all the features and advantages of the battery cell, the details of which are omitted here. In short, the advantages include at least a long cycle life and a high energy density.

According to still another aspect of this application, an electrical device is disclosed. The electrical device includes the battery disclosed above. In this way, the electrical device possesses all the features and advantages of the battery, the details of which are omitted here. In short, the advantages include at least a high energy density and high safety.

### BRIEF DESCRIPTION OF DRAWINGS

The above and/or additional aspects and advantages of this application will become evident and easily comprehensible through the description of some embodiments with reference with the drawings outlined below:
FIG. 1 shows a schematic diagram of arrangement of a first positive electrode plate and a second positive electrode plate according to an embodiment of this application;
FIG. 2 shows a schematic diagram of arrangement of a first positive electrode plate and a second positive electrode plate according to another embodiment of this application; and
FIG. 3 shows a schematic diagram of arrangement of a first positive electrode plate and a second positive electrode plate according to another embodiment of this application.

### List of reference numerals:

1000: battery cell; 1100: first positive electrode plate; 1200: second positive electrode plate; 1300: negative electrode plate.

### DETAILED DESCRIPTION OF EMBODIMENTS

The following describes some embodiments of this application in detail. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

According to an aspect of this application, a battery cell 1000 is disclosed. The battery cell includes a positive electrode plate and a negative electrode plate 1300. The positive electrode plate includes: a first positive electrode plate 1100 and a second positive electrode plate 1200. The first positive electrode plate 1100 includes a first positive active layer. The first positive active layer includes a first positive electrode material. The first positive electrode material includes a ternary material. The second positive electrode plate 1200 includes a second positive active layer. The second positive active layer includes a second positive electrode material. The second positive electrode material includes a lithium-containing phosphate. This design avoids the processing problems caused by the direct mixing of the ternary material and the lithium-containing phosphate, prolongs the cycle life of the battery cell 1000, and increases the energy density of the battery cell 1000.

The following is a detailed description of the principles by which this application can achieve the above beneficial effects.

A ternary material used as a positive active material possesses the advantage of a high energy density, but a layered transition metal oxide is prone to material degradation caused by factors such as phase change, Li-Ni mixing, oxygen release, and structural collapse during cycling, thereby resulting in a relatively short lifespan. A lithium-containing phosphate material possesses the advantages of high stability, high cycling stability, and a long lifespan, but a relatively low energy density. The ternary material and the lithium-containing phosphate material mixed to serve as the positive active material of the battery cell 1000 can give full play to the advantages of both materials. However, as mentioned earlier, when the ternary material is mixed with the lithium-containing phosphate material, various processing problems such as gelation, filter cartridge blockage, and particle dispersion nonuniformity are prone to occur due to different operating voltages and material properties of the two materials. A battery cell 1000 is disclosed in this application, and the battery cell 1000 includes a plurality of first positive electrode plates 1100 and a plurality of second positive electrode plates 1200. The active material on the first positive electrode plate 1100 includes a ternary material. The active material on the second positive electrode plate 1200 includes a lithium-containing phosphate. The two materials are formed on two positive electrode plates respectively, and are then combined with a negative electrode plate 1300 to form a battery cell 1000, without a need to mix the two types of positive electrode materials, thereby avoiding the problems of gelation, filter cartridge blockage, and particle dispersion nonuniformity caused by the mixing. In addition, the positive active material in the battery cell 1000 includes both a ternary material and a lithium manganese phosphate material to increase the energy density of the battery cell 1000 and prolong the cycle life of the battery cell 1000.

According to some embodiments of this application, the number of the first positive electrode plates 1100 is x₁, the number of the second positive electrode plates 1200 is x₂, a gravimetric capacity of each first positive electrode plate 1100 is a mA·h/g, and a gravimetric capacity of each second positive electrode plate 1200 is b mA-h/g, satisfying: 0.5 ≤ (b/a)² + x₁/(x₁ + x₂) ≤ 1.6. For example, the value of this parameter may be 0.5, 0.7, 0.9, 1.1, 1.3, 1.6, or a range formed by any two thereof. According to some embodiments of this application, 0.85 ≤ (b/a)² + x₁/(x₁ + x₂) ≤ 1.35. In this way, the safety of the battery cell 1000 is improved while ensuring a high energy density of the battery cell 1000.

According to some embodiments of this application, when the number of the first positive electrode plates 1100 and the number of the second positive electrode plates 1200 satisfy the above relationship, the specific number of the first positive electrode plates 1100 and the specific number of the second positive electrode plates 1200 are not limited. The number of the first positive electrode plates 1100 may be larger than the number of the second positive electrode plates 1200; or, the number of the second positive electrode plates 1200 may be larger than the number of the first positive electrode plates 1100. Preferably, the number of the first positive electrode plates 1100 is the same as the number of the second positive electrode plates 1200. Specifically, x₁ and x₂ satisfy: 0.01 ≤ x₁/x₂ ≤ 100. For example, the value of this parameter may be 0.01, 1, 10, 30, 50, 70, 90, 100, or a range formed by any two thereof. According to some embodiments of this application, x₁/x₂ may be 1. In this way, the energy density and service life of the battery cell 1000 can reach a well-balanced level.

According to some embodiments of this application, the gravimetric capacity a of the first positive electrode plate 1100 and the gravimetric capacity b of the second positive electrode plate 1200 may satisfy: 150 mA-h/g ≤ a ≤ 230 mA-h/g, for example, a may be 160 mA·h/g, 170 mA-h/g, 180 mA-h/g, 190 mA-h/g, 200 mA·h/g, 210 mA-h/g, 220 mA-h/g, or the like; and 100 mA·h/g ≤ b ≤ 160 mA-h/g, for example, b may be 110 mA·h/g, 120 mA-h/g, 130 mA-h/g, 140 mA-h/g, 150 mA-h/g, or the like. In this way, the energy density of the battery cell 1000 is further increased, and the safety of the battery cell 1000 is improved.

According to some embodiments of this application, a coating areal density of the first positive electrode material on the first positive electrode plate 1100 is 80 g/m² to 600 g/m²; and/or, a coating areal density of the second positive electrode material on the second positive electrode plate 1200 is 80 g/m² to 600 g/m². In this way, the energy density of the battery cell 1000 is increased. Specifically, the coating areal density of the first positive electrode material and the second positive electrode material may be the same or different. A person skilled in the art can design the coating areal density as required.

According to some embodiments of this application, a compaction density of the first positive electrode plate 1100 is 2.0 g/cm³ to 4.3 g/cm³, for example, the compaction density of the first positive electrode plate may be 2.0 g/cm³, 2.3 g/cm³, 2.6 g/cm³, 2.9 g/cm³, 3.2 g/cm³, 3.5 g/cm³, 3.8 g/cm³, 4.1 g/cm³, 4.3 g/cm³, or the like, or a range formed by any two thereof; and/or, a compaction density of the second positive electrode plate 1200 is 2.0 g/cm³ to 4.3 g/cm³, for example, the compaction density of the second positive electrode plate may be 2.0 g/cm³, 2.3 g/cm³, 2.6 g/cm³, 2.9 g/cm³, 3.2 g/cm³, 3.5 g/cm³, 3.8 g/cm³, 4.1 g/cm³, 4.3 g/cm³, or the like, or a range formed by any two thereof. In this way, the safety of the battery cell 1000 is improved.

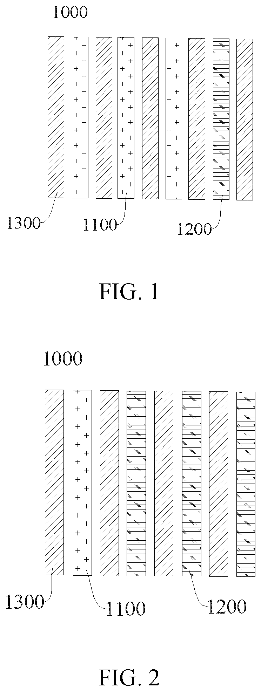

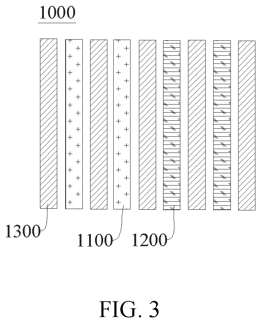

According to some embodiments of this application, the arrangement of the first positive electrode plates 1100 and the second positive electrode plates 1200 inside the battery cell 1000 is not particularly limited. Specifically, when the number of the first positive electrode plates 1100 is different from the number of the second positive electrode plates 1200, the inside of the battery cell 1000 may be divided into a first region and a second region. Only the first positive electrode plates 1100 are arranged in the first region, and only the second positive electrode plates 1200 are arranged in the second region (referring to FIG. 1 and FIG. 2); or, the first positive electrode plate 1100 and the second positive electrode plate 1200 are arranged alternately. When the number of the first positive electrode plates 1100 is the same as the number of the second positive electrode plates 1200 inside the battery cell 1000, the first positive electrode plates 1100 and the second positive electrode plates 1200 may be arranged evenly in the entire battery cell 1000, that is, arranged as: a first positive electrode plate 1100, a negative electrode plate 1300, a second positive electrode plate 1200, a negative electrode plate 1300, a first positive electrode plate 1100, a negative electrode plate 1300, a second positive electrode plate 1200, a negative electrode plate 1300, and so on; or, the inside of the battery cell 1000 may be divided into a first region and a second region, only the first positive electrode plates 1100 are arranged in the first region, and only the second positive electrode plates 1200 are arranged in the second region (referring to FIG. 3). In short, the specific arrangement of the first positive electrode plates 1100 and the second positive electrode plates 1200 may be designed and adjusted according to actual needs.

The following is a detailed description of a lithium-containing phosphate material according to this application.

According to some embodiments of this application, the lithium-containing phosphate includes Liₐ₁A_{b1}MP_{1-c1}C_{c1}O_{4-d1}D_{d1}, where A includes one or more of Group IA elements; M includes at least one of a Group VIIB element or a doping element of the Group VIIB element; C includes one or more of a Group IIIA element, a Group IVA element, a Group VA element, or a Group VIA element; D includes one or more of a Group VIA element or a Group VIIA element; a₁ is selected from 0.9 to 1.1; b₁ is selected from 0 to 0.1; c₁ is selected from 0 to 0.1; and d₁ is selected from 0 to 0.1.

Further, the lithium-containing phosphate includes Liₐ₁A_{b1}Mn₁₋ₑ₁Eₑ₁P_{1-c1}C_{c1}O_{4-d1}D_{d1}, where A includes one or more of Zn, Al, Na, K, Mg, Nb, Mo, or W; E includes one or more of Zn, Al, Na, K, Mg, Mo, W, Ti, V, Zr, Fe, Ni, Mg, Co, Ga, Sn, Sb, Nb, or Ge; C includes one or more of B (boron), S, Si, or N; D includes one or more of S, F, Cl, or Br; a₁ is any value selected from 0.9 to 1.1; b₁ is any value selected from 0 to 0.100; c₁ is any value selected from 0.001 to 0.100; d₁ is any value selected from 0.001 to 0.1; and e₁ is any value selected from 0.001 to 0.5. In this way, by doping the compound LiMnPO₄ at the Li site, Mn site, P site, and O site simultaneously with specified elements in a specified amount, this application can achieve significantly improved C-rate performance, reduce the dissolution of Mn and the Mn-site doping element significantly, achieve significantly improved cycle performance and/or high-temperature stability, and increase the gravimetric capacity and compaction density of the material.

Still further, the lithium-containing phosphate includes Li₁₊ₓMn₁₋ₑ₁Eₑ₁P_{1-c1}C_{c1}O₄, where 1 + x = a₁, x is any value of -0.100 to 0.100; e₁ is any value of 0.001 to 0.500; c₁ is any value of 0.001 to 0.100; E includes one or more selected from Zn, Al, Na, K, Mg, Mo, W, Ti, V, Zr, Fe, Ni, Mg, Co, Ga, Sn, Sb, Nb, or Ge; and C includes one or more selected from B (boron), S, Si, or N.

According to some embodiments of this application, the second positive electrode material includes a core and a shell that covers at least a part of a surface of the core, and the core includes the lithium-containing phosphate. Specifically, the shell includes a first coating layer covering the core and a second coating layer covering the first coating layer. The first coating layer includes a pyrophosphate WP₂O₇ and a phosphate XPO₄, where W and X each are one or more independently selected from Li, Fe, Ni, Mg, Co, Cu, Zn, Ti, Ag, Zr, Nb, or Al. The second coating layer includes carbon.

Therefore, the second positive active material of this application can improve the gravimetric capacity, cycle performance, and safety performance of the battery cell 1000. Although the mechanism remains unclear, speculatively, a possible reason is that the second positive active material of this application is a core-shell structure, in which the manganese site and the phosphorus site of the lithium manganese phosphate core are doped with element E and element C respectively. The doping not only effectively reduces manganese dissolution, and in turn, reduces the manganese ions migrating to the negative electrode, reduces the consumption of an electrolyte solution caused by the decomposition of an SEI film, improves the cycle performance and safety performance of the battery cell 1000, but also promotes Mn-O bond adjustment, reduces the lithium-ion migration barrier, facilitates lithium-ion migration, and improves the C-rate performance of the battery cell 1000. By coating the core with the first coating layer that contains the pyrophosphate and the phosphate, this application can further increase the manganese migration resistance, reduce manganese dissolution, reduce the content of lithium impurities on the surface, reduce the contact between the core and the electrolyte solution, and in turn, reduce side reactions on the interface, reduce gas production, and improve the high-temperature storage performance, cycle performance, and safety performance of the battery cell 1000. By further coating a carbon-containing layer used as a second coating layer, this application can further improve the safety performance and kinetic performance of the battery cell **1000.**

The following is a detailed description of a ternary material according to this application.

According to some embodiments of this application, the ternary material is Liₐ₂Ni_{b2}Co_{c2}M1_{d2}M2ₑ₂O_{f2}R'_{g2}, where: 0.75 ≤ a2 ≤ 1.2, 0 < b2 < 1, 0 < c2 < 1, 0 < d2 < 1, 0 ≤ e2 ≤ 0.2, 1 ≤ f2 ≤ 2.5, 0 ≤ g2 ≤ 1, f2 + g2 ≤ 3; M1 includes Mn and/or Al; M2 includes at least one of Zr, Zn, Cu, Cr, Mg, Fe, V, Ti, Sr, Sb, Y, W, or Nb; and R' includes at least one of N, F, S, or Cl.

Specifically, the ternary material includes at least one of lithium nickel cobalt aluminum oxide or lithium nickel cobalt manganese oxide.

According to some embodiments of this application, based on a total mass of the ternary material, the mass percent of Ni may be 30% to 99.5%, and the mass percent of Co may be 3% to 49.5%. Further, the mass percent of Ni may be 60% to 88%, and the mass percent of Co may be 5% to 35%. In this way, by controlling the mass percent of Ni to fall within the above range, this application can further increase the energy density of the battery cell 1000. By controlling the mass percent of Co to fall within the above range, this application can further increase the electronic conductivity and ionic conductivity of the ternary material, and effectively improve the kinetic performance of the ternary material.

According to some embodiments of this application, based on the total mass of the ternary material, the mass percent of Ni may be 30%, 40%, 50%, 60%, 70%, 80%, 90%, 99.5%, or the like, or a range formed by any two thereof.

According to some embodiments of this application, based on the total mass of the ternary material, the mass percent of Co may be 3%, 10%, 20%, 30%, 40%, 49.5%, or the like, or a range formed by any two thereof.

According to some specific embodiments of this application, the ternary material is a single crystal. The particle diameter of the single crystal satisfies 0.2 µm ≤ Dᵥ₅₀ ≤ 10 µm, for example, may be 0.2 µm, 1 µm, 2 µm, 3 µm, 4 µm, 5 µm, 6 µm, 7 µm, 8 µm, 9 µm, 10 µm, or the like, or a range formed by any two thereof. The particle diameter of the single crystal satisfies Dᵥ₉₉ ≤ 18 µm, for example, may be 2 µm, 4 µm, 6 µm, 8 µm, 10 µm, 12 µm, 14 µm, 16 µm, 18 µm, or the like, or a range formed by any two thereof. In this way, the particle diameter of the ternary material is relatively small, thereby shortening the lithium-ion diffusion path, reducing the bulk phase diffusion impedance, reducing the polarization of the material, and increasing the energy density of the battery cell 1000.

When the particle diameter of the material is relatively small, the surface energy is relatively large, and the particles are prone to agglomerate through interaction. According to some specific embodiments of this application, the ternary material may be a secondary particle formed by agglomerating primary particles. The particle diameter of the primary particles is 50 nm to 800 nm, for example, may be 50 nm, 100 nm, 200 nm, 300 nm, 400 nm, 500 nm, 600 nm, 700 nm, 800 nm, or the like, or a range formed by any two thereof. The particle diameter of the secondary particle satisfies 4 µm ≤ Dᵥ₅₀ ≤ 13 µm, for example, may be 4 µm, 6 µm, 8 µm, 10 µm, 12 µm, 13 µm, or the like, or a range formed by any two thereof. The particle diameter of the secondary particle also satisfies Dᵥ₉₉ ≤ 30 µm, for example, may be 5 µm, 10 µm, 15 µm, 20 µm, 25 µm, 30 µm, or the like, or a range formed by any two thereof. In this way, the particle diameter of the primary particles inside the secondary particle is relatively small, thereby further shortening the lithium-ion diffusion path, reducing the bulk phase diffusion impedance, reducing the polarization of the material, and increasing the energy density of the battery cell 1000.

According to some specific embodiments of this application, a BET specific surface area of the ternary material is 0.4 m²/g to 1.5 m²/g. In other words, when the ternary material is a single crystal particle or a secondary particle, the BET specific surface area of the ternary material falls within a range of 0.4 m²/g to 1.5 m²/g. For example, the BET specific surface area may be 0.6 m²/g, 0.8 m²/g, 1.0 m²/g, 1.2 m²/g, 1.4 m²/g, or the like. In this way, by controlling the compactness of the ternary material, this application avoids a relatively low compaction density of the ternary material when the ternary material is a core-shell structure or a hollow material, where the low compaction density of the ternary material causes the overall compaction density of the mixed system to be low and reduces the energy density.

Similarly, according to some specific embodiments of this application, the second positive electrode material may also be a single crystal. The particle diameter of the second positive electrode material is 50 nm to 1000 nm, for example, may be 100 nm, 200 nm, 300 nm, 400 nm, 500 nm, 600 nm, 700 nm, 800 nm, 900 nm, or the like. In this way, the particle diameter of the second positive electrode material is relatively small, thereby shortening the lithium-ion diffusion path and reducing the bulk phase diffusion impedance in the second positive electrode material, reducing the polarization of the material, and increasing the energy density of the battery cell 1000.

According to some specific embodiments of this application, the second positive electrode material may also be a secondary particle formed by agglomerating primary particles, and particle diameters of the secondary particles are: 0.8 µm ≤ Dᵥ₅₀ ≤ 4.2 µm, and Dᵥ₉₉ ≤ 30 µm. This setting can further shorten the lithium-ion diffusion path, reduce the bulk phase diffusion impedance, reduce the polarization of the material, and increase the energy density of the battery cell 1000.

According to some embodiments of this application, the BET specific surface area of the second positive electrode material is 8 m²/g to 20 m²/g, for example, 8 m²/g, 10 m²/g, 12 m²/g, 14 m²/g, 16 m²/g, 18 m²/g, 20 m²/g, or the like, or a range formed by any two thereof. In this way, the compactness of the secondary particles is controlled to avoid a low compaction density of some core-shell structure materials and hollow materials, prevent the overall compaction density of the material from being low resultingly, and increase the energy density of the battery cell 1000.

According to some embodiments of this application, the negative active material on the negative electrode plate 1300 may be any one of various materials suitable for use as a negative active material in an electrochemical energy storage device in the art, for example, may be, but is not limited to, one or more of graphite, soft carbon, hard carbon, carbon fiber, mesocarbon microbeads, silicon-based material, tin-based material, lithium titanium oxide, or another metal alloyable with lithium. The graphite may be one of or any combination of artificial graphite, natural graphite, or modified graphite. The silicon-based material may be one of or any combination of simple-substance silicon, a silicon-oxygen compound, a silicon-carbon composite, a silicon alloy, or the like. The tin-based material may be one of or any combination of simple-substance tin, a tin-oxide compound, or a tin alloy. The negative current collector is generally a structure or component that collects a current. The negative current collector may be any one of various materials suitable for use as a negative current collector in an electrochemical energy storage device in the art. For example, the negative current collector may be, but is not limited to, metal foil, and more specifically, may be, but is not limited to, copper foil. In addition, the negative electrode plate 1300 may be a lithium sheet instead.

According to some embodiments of this application, an electrolyte solution in the battery cell 1000 may be a nonaqueous electrolyte solution, and typically, a lithium salt solution formed by dissolving a lithium salt in an organic solvent. The lithium salt may be an inorganic lithium salt such as LiClO₄, LiPF₆, LiBF₄, LiAsF₆, LiSbF₆, or an organic lithium salt such as LiCF₃SO₃, LiCF₃CO₂, Li₂C₂F₄(SO₃)₂, LiN(CF₃SO₂)₂, 9LiC(CF₃SO₂)₃, or LiCₙF₂ₙ₊₁SO₃ (n ≥ 2). The organic solvent used in the nonaqueous electrolyte solution may be: a cyclic carbonate ester such as ethylene carbonate, propylene carbonate, butylene carbonate, and vinylene carbonate; a chain carbonate ester such as dimethyl carbonate, diethyl carbonate, and ethyl methyl carbonate; a chain ester such as methyl propionate; a cyclic ester such as γ-butyrolactone; a chain ether such as dimethoxyethane, diethyl ether, diglyme, and triglyme; a cyclic ether such as tetrahydrofuran and 2-methyltetrahydrofuran; a nitrile such as acetonitrile and propionitrile; or a mixture of such solvents.

According to some embodiments of this application, a separator in the battery cell 1000 may be selected from a polyethylene film, a polypropylene film, a polyvinylidene fluoride film, or a multilayer composite film thereof.

According to another aspect of this application, a battery is disclosed. The battery includes the battery cell 1000 disclosed above. In this way, the battery possesses all the features and advantages of the battery cell 1000, the details of which are omitted here. In short, the advantages include at least a long cycle life and a high energy density.

According to still another aspect of this application, an electrical device is disclosed. The electrical device includes the battery disclosed above. In this way, the electrical device possesses all the features and advantages of the battery, the details of which are omitted here. In short, the advantages include at least a high energy density and high safety.

### Embodiments

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Method for preparing a battery cell

### 1. Preparing a first positive electrode plate

Adding the first positive electrode material provided in each embodiment or comparative embodiment, polyvinylidene difluoride (PVDF), and conductive carbon into a specified amount of N-methyl-pyrrolidone (NMP), in which the mass ratio between the active material, the PVDF, and the conductive carbon is 90: 5: 5. Stirring the mixture in a drying room to form a homogeneous slurry, and controlling the viscosity of the slurry to be 3000 to 10000 mPa·S. Applying the slurry onto aluminum foil, and drying and cold-pressing the foil to form a first positive electrode plate.

### 2. Preparing a second positive electrode plate

Adding the second positive electrode material provided in each embodiment or comparative embodiment, polyvinylidene difluoride (PVDF), and conductive carbon into a specified amount of N-methyl-pyrrolidone (NMP), in which the mass ratio between the active material, the PVDF, and the conductive carbon is 90: 5: 5. Stirring the mixture in a drying room to form a homogeneous slurry, and controlling the viscosity of the slurry to be 3000 to 10000 mPa·S. Applying the slurry onto aluminum foil, and drying and cold-pressing the foil to form a second positive electrode plate.

### 3. Preparing an electrolyte solution

Adding 1 mol/L LiPF₆ into a solvent formed by ethylene carbonate (EC), diethyl carbonate (DEC), and dimethyl carbonate (DMC) mixed at a volume ratio of 1: 1: 1, and adding 5 wt% fluoroethylene carbonate to obtain an electrolyte solution.

### 4. Preparing a negative electrode plate

Preparing a graphite negative electrode: Mixing artificial graphite as a negative active material, sodium carboxymethyl cellulose (CMC), conductive carbon, and styrene-butadiene rubber (SBR) at a mass ratio of 94: 1.5: 2: 2.5, adding a specified amount of deionized water, stirring the mixture in a drying room to form a homogeneous slurry, and controlling the viscosity of the slurry to be 2000 to 12000 mPa·S. Applying the above slurry onto copper foil at a coating weight that matches the positive electrode (94% × coating mass on the negative electrode × gravimetric capacity of graphite = 1.15 × 90% × coating weight on the positive electrode × gravimetric capacity of the composite positive electrode, and the gravimetric capacity may be learned with reference to the gravimetric capacity information of the active material powder of a half-cell at the end of a 3^{rd} cycle, where the half-cell is prepared by using the slurry as an active material and using a lithium sheet as a counter electrode). Drying and cold-pressing the foil to form a positive electrode plate.

### 5. Providing a separator

Using a polyethylene (PE) porous polymer film as a separator.

### 6. Preparing a battery cell

Performing steps such as electrode plate die-cutting, tab cleaning, plate stacking, welding, top sealing, electrolyte injection, pre-forming, degassing, chemical forming, and molding in a drying room to obtain a stacked-type battery cell for testing.

### Performance test methods

### 1. Testing the energy density of the battery

Measuring the capacity, nominal voltage, and mass of the battery cell separately. Calculating the gravimetric energy density by the following formula: gravimetric energy density = capacity × voltage/mass, where the mass may be weighed by a balance (such as Hengping JA31002). The mass may be accurate to 0.1 g.

### 2. Method for testing the capacity and nominal voltage of the battery cell

Charging the battery cell at a current rate of 0.33C at 25 °C to a full capacity, and then fully discharging the battery, thereby completing one cycle. Repeating the charge and discharge operations for several cycles, and recording the 3^{rd}-cycle discharge capacity as the capacity of the battery cell. The voltage corresponding to half of the discharge capacity is a nominal voltage. The test process is as follows: 1) Charging the battery cell at a constant current of 0.33C until the voltage reaches an upper-limit cut-off voltage of 4.4 V, and then charging the battery cell at a constant voltage until the current is less than 0.05C; 2) leaving the battery cell to stand for 10 minutes; 3) discharging the battery cell at a constant current of 0.33C until the voltage reaches a lower-limit cut-off voltage of 2.5 V, and recording the discharge capacity at this time as the capacity of the battery cell. The voltage corresponding to half of the discharge capacity is the nominal voltage. The relevant terms and test methods may be learned with reference to the standards GB/T 19596, GB/T 31484-2015, GB/T31485-2015, GB/T 31486-2015, and *Electric Vehicles Traction Battery Safety Requirements.* The test device may be a device well-known in the art, for example, a charger-discharger and a temperature-controlled chamber.

### 3. Method for testing a lithium-ion battery at 25 °C at 10%SoC

Testing the power performance of an assembled battery at a specified temperature and a specified SoC by using a battery charger-discharger and a temperature-controlled chamber. The relevant terms and test method may be learned with reference to GB/T 19596 and GB/T 31486.

### 4. Testing the discharge capacity of a battery cell

Leaving the battery cell to stand for 30 minutes at 25 °C, and then discharging the battery cell at a constant current of 0.33C until the voltage reaches a lower-limit cut-off voltage. Leaving the battery to stand for 5 minutes, and then charging the battery cell at a constant current of 0.33C until the voltage reaches an upper-limit cut-off voltage, and then charging the battery cell at a constant voltage until the current is less than 0.05C. Leaving the battery cell to stand for 5 minutes, and then discharging the battery cell at a constant current of 0.33C until the voltage reaches a lower-limit cut-off voltage. Recording the discharge capacity at this time as an initial discharge capacity C₀.

Repeating the above steps on the battery cell with the discharge current changed to 2C. Recording the discharge capacity Cₙ. The 2C discharge capacity of the secondary battery is Cₙ/C₀ × 100%. The discharge capacity at other current rates is obtained in a similar way.

### 5. Method for testing the particle diameter

Turning on and preheating a Malvern 3000 laser particle size analyzer for 30 minutes. Selecting a Hydro 2000SM small-volume sample dispersion unit, and connecting the sample dispersion unit to a laser particle size analyzer. Adding an appropriate amount of clean water into the sample dispersion unit. Setting the stirrer speed to 3000 rpm. Cleaning the sample for 3 to 5 seconds. Repeating the cleaning step for 3 or more times. Adding an appropriate amount of pure water into the sample feeder pool after completion of cleaning. Expelling the bubbles, and adjusting the stirrer speed evenly to 3000 rpm. Adjusting the stirrer speed to the maximum value and then to zero, and waiting for 3 to 5 seconds. Repeating the above operations for 2 or more times. Taking a 50 ml beaker, adding 30 ml of ultrapure water into the beaker, and mixing the ultrapure water with 6 grams of sample thoroughly. Placing the sample into an ultrasonicator for dispersion for 5 minutes, where the ultrasonic power is 60 W, the measurement time continues for 6 seconds, the level of obscuration is set to 8% to 12%, and the measurement is performed for 3 times. Using the last measured data as the particle diameter of the material.

### 6. Determining the nickel content and cobalt content in a ternary material by inductively coupled plasma (ICP) optical emission spectrometry

Taking approximately 0.4 gram of dry positive electrode plate as a sample, adding 10 ml of aqua regia into the sample, and then putting the sample onto a hot plate and heating the sample up to 180 °C. Leaving the sample to stand for 30 minutes. Cooling the digest solution to a room temperature after the sample of the positive electrode plate is digested. Transferring the solution to a 100 ml volumetric flask, and making the digest solution reach a marked volume. Taking 1 ml of the sample, and diluting the sample to 100 ml. Performing an ICP test on the sample to obtain the content of Ni and Co.

### Setting the number and gravimetric capacity of the first positive electrode plates and the second positive electrode plates in the battery cell

The battery cell parameters and test results are shown in Table 1 and Table 2. In the embodiments and the comparative embodiments, the first positive electrode material is LiNi_{0.5}Co_{0.2}Mn_{0.3}O₂, and the second positive electrode material is LiFe_{0.5}Mn_{0.5}PO₄.

**Table 1 (To be continued)**

| | Comparative Embodiment 1 | Comparative Embodiment 2 | Embodiment 1 | Embodiment 2 | Embodiment 3 | Embodiment 4 |
|---|---|---|---|---|---|---|
| Total number of electrode plates | 100 | 100 | 100 | 100 | 100 | 100 |
| a/mA·h/g | 190 | 190 | 190 | 190 | 190 | 190 |
| b/mA·h/g | 140 | 140 | 140 | 140 | 140 | 140 |
| x₁/(x₁+x₂) | 00 | 1.00 | 0.01 | 0.10 | 0.20 | 0.30 |
| (b/a)² | 0.7 | 0.5 | 0.5 | 0.5 | 0.5 | 0.5 |
| (b/a)²+x₁/(x₁+x₂) | 00.74 | 1.54 | 0.55 | 0.64 | 0.74 | 0.84 |
| x₁ | 0 | 100 | 1 | 10 | 20 | 30 |
| x₂ | 100 | 0 | 99 | 90 | 80 | 70 |
| Energy density of first positive electrode plate (Wh/kg) | / | 240 | 240 | 240 | 240 | 240 |
| Energy density of second positive electrode plate (Wh/kg) | 160 | 160 | 160 | 160 | 160 | 160 |

**Table 1 (Continued)**

| | Embodiment 5 | Embodiment 6 | Embodiment 7 | Embodiment 8 | Embodiment 9 | Embodiment 10 |
|---|---|---|---|---|---|---|
| Total number of electrode plates | 100 | 100 | 100 | 100 | 100 | 100 |
| a/mA·h/g | 190 | 190 | 190 | 190 | 190 | 190 |
| b/mA·h/g | 140 | 140 | 140 | 140 | 140 | 140 |
| x₁/(x₁+x₂) | 0.40 | 0.50 | 0.60 | 0.70 | 0.80 | 0.90 |
| (b/a)² | 0.5 | 0.5 | 0.5 | 0.5 | 0.5 | 0.5 |
| (b/a)²+x₁/(x₁+x₂) | 0.94 | 1.04 | 1.14 | 1.24 | 1.34 | 1.43 |
| x₁ | 40 | 50 | 60 | 70 | 80 | 90 |
| x₂ | 60 | 50 | 40 | 30 | 20 | 10 |
| Energy density of first positive electrode plate (Wh/kg) | 240 | 240 | 240 | 240 | 240 | 240 |
| Energy density of second positive electrode plate (Wh/kg) | 160 | 160 | 160 | 160 | 160 | 160 |

**Table 1 (Continued)**

| | Embodiment 11 | Embodiment 12 | Embodiment 13 | Embodiment 14 | Embodiment 15 |
|---|---|---|---|---|---|
| Total number of electrode plates | 100 | 100 | 100 | 100 | 100 |
| a/mA·h/g | 190 | 150 | 240 | 190 | 190 |
| b/mA·h/g | 140 | 140 | 140 | 80 | 200 |
| x₁/(x₁+x₂) | 0.99 | 0.5 | 0.5 | 0.5 | 0.5 |
| (b/a)² | 0.5 | 0.9 | 0.3 | 0.2 | 1.1 |
| (b/a)²+x₁/(x₁+x₂) | 1.54 | 1.37 | 0.84 | 0.68 | 1.61 |
| x₁ | 99 | 50 | 50 | 50 | 50 |
| x₂ | 1 | 50 | 50 | 50 | 50 |
| Energy density of first positive electrode plate (Wh/kg) | 240 | 189 | 303 | 240 | 240 |
| Energy density of second positive electrode plate (Wh/kg) | 160 | 160 | 160 | 91 | 229 |

**Table 2**

| | Energy density of battery cell (Wh/kg) | Power performance of battery cell at 25 °C at 10%SoC | Hot oven temperature upon failure (°C) |
|---|---|---|---|
| Comparative Embodiment 1 | 160 | 1298 | 230 |
| Comparative Embodiment 2 | 240 | 476 | 150 |
| Embodiment 1 | 160.8 | 1300 | 198 |
| Embodiment 2 | 168 | 1375 | 183 |
| Embodiment 3 | 176 | 1444 | 180 |
| Embodiment 4 | 184 | 1436 | 178 |
| Embodiment 5 | 192 | 1438 | 176 |
| Embodiment 6 | 200 | 1361 | 173 |
| Embodiment 7 | 208 | 1223 | 170 |
| Embodiment 8 | 216 | 964 | 166 |
| Embodiment 9 | 224 | 791 | 161 |
| Embodiment 10 | 232 | 569 | 156 |
| Embodiment 11 | 239.2 | 569 | 151 |
| Embodiment 12 | 174.7 | 817 | 195 |
| Embodiment 13 | 231.6 | 871 | 133 |
| Embodiment 14 | 165.7 | 953 | 185 |
| Embodiment 15 | 234.3 | 968 | 151 |

As can be seen from Table 2, referring to Comparative Embodiment 2, when the battery cell includes the first positive electrode plate alone, the energy density of the battery cell is relatively high, but the power performance of the battery cell at 25 °C at 10%SoC is relatively low, and the hot box temperature upon failure of the battery cell is relatively low. Referring to Comparative Embodiment 1, when the battery cell includes the second positive electrode plate alone, the energy density of the battery cell is low, but the power performance of the battery cell at 25 °C at 10%SoC is relatively high, and the hot box temperature upon failure of the battery cell is relatively high. Referring to Embodiments 1 to 15, when the battery cell includes both the first battery cell and the second battery cell, the energy density of the battery cell, the power performance of the battery cell at 25 °C at 10%SoC, and the hot oven temperature upon failure of the battery cell can be optimized concurrently. Referring to Embodiments 5 to 9, when the first positive electrode plates and the second positive electrode plates in the battery cell satisfy 0.85 ≤ (b/a)² + x₁/(x₁ + x₂) ≤ 1.35, the overall performance of the battery cell is superior. This setting ensures a high energy density, helps to achieve high power performance of the battery cell at 25 °C at 10%SoC, and increases the hot box temperature upon failure of the battery cell accordingly. Referring to Embodiment 6, when the ratio of the number of the first positive electrode plates to the number of the second positive electrode plates is 1, the overall performance of the battery cell is optimal.

### Setting the particle diameter when the second positive electrode material is secondary particles

The parameters and test results of the battery cells in Embodiments 16 to 21 are shown in Table 3 and Table 4.

**Table 3**

| | Embodiment 16 | Embodiment 17 | Embodiment 18 | Embodiment 19 | Embodiment 20 | Embodiment 21 |
|---|---|---|---|---|---|---|
| First positive electrode material | LiNi_{0.5}Co_{0.2}Mn_{0.3}O₂ | | | | | |
| Second positive electrode material | LiFe_{0.5}Mn_{0.5}PO₄ | | | | | |
| Number of first positive electrode plates | 5 | 5 | 5 | 5 | 5 | 5 |
| Number of second positive electrode plates | 5 | 5 | 5 | 5 | 5 | 5 |
| Coating areal density of first positive electrode material (g/m²) | 370 | 370 | 370 | 370 | 370 | 370 |
| Coating areal density of second positive electrode material (g/m²) | 450 | 450 | 450 | 450 | 450 | 450 |

**Table 4**

| | Dᵥ₅₀ (µm) | Powder compaction density under 3 tons (g/cm³) | Gravimetric capacity (mA·h/g) | 2C discharge capacity |
|---|---|---|---|---|
| Embodiment 16 | 0.2 | 2.27 | 148 | 89% |
| Embodiment 17 | 1 | 2.19 | 151 | 87% |
| Embodiment 18 | 2 | 2.05 | 153 | 85% |
| Embodiment 19 | 3 | 2.01 | 154 | 84% |
| Embodiment 20 | 4 | 1.95 | 156 | 82% |
| Embodiment 21 | 10 | 1.78 | 160 | 77% |

As can be seen from Table 4, when the particle diameter of the second positive electrode material gradually increases, the 2C discharge capacity of the battery cell shows a decreasing trend. When the particle diameter of the second positive electrode material is 10 µm, the 2C discharge capacity of the battery cell is the lowest, indicating that a smaller particle diameter of the second positive electrode material helps to shorten the lithium-ion diffusion path and reduce the bulk phase diffusion impedance in the second positive electrode material, and increase the energy density of the battery cell.

### Setting the mass percentages of Ni and Co in the ternary material

The parameters and test results of the battery cells in Embodiments 22 to 30 are shown in Table 5 to Table 7.

**Table 5**

| | First positive electrode material | Second positive electrode material |
|---|---|---|
| Embodiment 22 | LiNi_{0.3}Co_{0.3}Mn_{0.4}O₂ | LiFe_{0.5}Mn_{0.5}PO₄ |
| Embodiment 23 | LiNi_{0.5}Co_{0.1}Mn_{0.4}O₂ | LiFe_{0.5}Mn_{0.5}PO₄ |
| Embodiment 24 | LiNi_{0.82}Co_{0.1}Mn_{0.08}O₂ | LiFe_{0.5}Mn_{0.5}PO₄ |
| Embodiment 25 | LiNi_{0.3}Co_{0.1}Mn_{0.6}O₂ | LiFe_{0.5}Mn_{0.5}PO₄ |
| Embodiment 26 | LiNi_{0.3}Co_{0.5}Mn_{0.2}O₂ | LiFe_{0.5}Mn_{0.5}PO₄ |
| Embodiment 27 | LiNi_{0.3}CO_{0.02}Mn_{0.6}O₂ | LiFe_{0.5}Mn_{0.5}PO₄ |
| Embodiment 28 | LiNi_{0.3}Co_{0.6}Mn_{0.1}O₂ | LiFe_{0.5}Mn_{0.5}PO₄ |
| Embodiment 29 | LiNi_{0.2}Co_{0.3}Mn_{0.5}O₂ | LiFe_{0.5}Mn_{0.5}PO₄ |
| Embodiment 30 | LiNi_{0.995}Co_{0.002}Mn_{0.002}O₂ | LiFe_{0.5}Mn_{0.5}PO₄ |

**Table 6 (To be continued)**

| | Embodiment 22 | Embodiment 23 | Embodiment 24 | Embodiment 25 | Embodiment 26 |
|---|---|---|---|---|---|
| Number of first positive electrode plates | 5 | 5 | 5 | 5 | 5 |
| Number of second positive electrode plates | 5 | 5 | 5 | 5 | 5 |
| Coating areal density of first positive electrode material (g/m²) | 370 | 370 | 370 | 370 | 370 |
| Coating areal density of second positive electrode material (g/m²) | 450 | 450 | 450 | 450 | 450 |

**Table 6 (Continued)**

| | Embodiment 27 | Embodiment 28 | Embodiment 29 | Embodiment 30 |
|---|---|---|---|---|
| Number of first positive electrode plates | 5 | 5 | 5 | 5 |
| Number of second positive electrode plates | 5 | 5 | 5 | 5 |
| Coating areal density of first positive electrode material (g/m²) | 370 | 370 | 370 | 370 |
| Coating areal density of second positive electrode material (g/m²) | 450 | 450 | 450 | 450 |

**Table 7**

| | Mass percent of Ni | Mass percent of Co | Gravimetric capacity (mA·h/g) | 2C discharge capacity |
|---|---|---|---|---|
| Embodiment 22 | 30.00% | 30.00% | 155 | 85% |
| Embodiment 23 | 50.00% | 10.00% | 170 | 71% |
| Embodiment 24 | 82.00% | 10.00% | 205 | 65% |
| Embodiment 25 | 30.00% | 10.00% | 150 | 67% |
| Embodiment 26 | 30.00% | 50.00% | 158 | 88% |
| Embodiment 27 | 30.00% | 2.00% | 130 | 43% |
| Embodiment 28 | 30% | 60% | 160 | 55% |
| Embodiment 29 | 20% | 30% | 150 | 44% |
| Embodiment 30 | 99.5% | 0.2% | 235 | 30% |

As can be seen from Table 7, in Embodiments 22 to 26, the mass percent of Ni is 30% to 99.5%, the mass percent of Co is 3% to 50%, and the 2C discharge capacity of the battery cell is greater than 65%. As can be seen from Embodiments 27 to 30, when the mass percent of Co or the mass percent of Ni is beyond the above range, the 2C discharge capacity of the battery cell is lower.

### Setting the particle diameter when the first positive electrode material is single crystals

The parameters and test results of the battery cells in Embodiments 31 to 38 are shown in Table 8 and Table 9.

**Table 8**

| | Embodiment 31 | Embodiment 32 | Embodiment 33 | Embodiment 34 | Embodiment 35 | Embodiment 36 | Embodiment 37 | Embodiment 38 |
|---|---|---|---|---|---|---|---|---|
| First positive electrode material | LiNi_{0.5}Co_{0.2}Mn_{0.3}O₂ | | | | | | | |
| Second positive electrode material | LiFe_{0.5}Mn_{0.5}PO₄ | | | | | | | |
| Number of first positive electrode plates | 5 | 5 | 5 | 5 | 5 | 5 | 5 | 5 |
| Number of second positive electrode plates | 5 | 5 | 5 | 5 | 5 | 5 | 5 | 5 |
| Coating areal density of first positive electrode material (g/m²) | 370 | 370 | 370 | 370 | 370 | 370 | 370 | 370 |
| Coating areal density of second positive electrode material (g/m²) | 450 | 450 | 450 | 450 | 450 | 450 | 450 | 450 |

**Table 9**

| | Dᵥ₅₀ of first positive electrode material (µm) | Powder compaction density under 3 tons (g/cm³) | Gravimetric capacity (mA·h/g) | 2C discharge capacity |
|---|---|---|---|---|
| Embodiment 31 | 0.2 | 3.405 | 192.4 | 92% |
| Embodiment 32 | 1 | 3.285 | 196.3 | 89% |
| Embodiment 33 | 2 | 3.075 | 198.9 | 87% |
| Embodiment 34 | 3 | 3.015 | 200.2 | 86% |
| Embodiment 35 | 4 | 2.925 | 202.8 | 83% |
| Embodiment 36 | 10 | 2.67 | 208 | 77% |
| Embodiment 37 | 0.05 | 3.42 | 189 | 75% |
| Embodiment 38 | 18 | 2.55 | 205 | 62% |

As can be seen from Embodiments 31 to 36 in Table 9, when the first positive electrode material is single crystals and Dᵥ₅₀ is 0.2 µm to 10 µm, the 2C discharge capacity of the battery cell is greater than 77%. As can be seen from Embodiments 37 and 38, when Dᵥ₅₀ is less than 0.2 µm or greater than 10 µm, the 2C discharge capacity of the battery cell is slightly lower.

### Setting the particle diameter when the first positive electrode material is secondary particles

The parameters and test results of the battery cells in Embodiments 39 to 44 are shown in Table 10 and Table 11.

**Table 10**

| | Embodiment 39 | Embodiment 40 | Embodiment 41 | Embodiment 42 | Embodiment 43 | Embodiment 44 |
|---|---|---|---|---|---|---|
| First positive electrode material | LiNi_{0.5}Co_{0.2}Mn_{0.3}O₂ | | | | | |
| Second positive electrode material | LiFe_{0.5}Mn_{0.5}PO₄ | | | | | |
| Number of first positive electrode plates | 5 | 5 | 5 | 5 | 5 | 5 |
| Number of second positive electrode plates | 5 | 5 | 5 | 5 | 5 | 5 |
| Coating areal density of first positive electrode material (g/m²) | 370 | 370 | 370 | 370 | 370 | 370 |
| Coating areal density of second positive electrode material (g/m²) | 450 | 450 | 450 | 450 | 450 | 450 |

**Table 11**

| | Dᵥ₅₀ of first positive electrode material (µm) | Powder compaction density under 3 tons (g/cm³) | Gravimetric capacity (mA·h/g) | 2C discharge capacity |
|---|---|---|---|---|
| Embodiment 39 | 4 | 3.53 | 203 | 97% |
| Embodiment 40 | 8 | 3.56 | 207 | 95% |
| Embodiment 41 | 10 | 3.57 | 210 | 94% |
| Embodiment 42 | 12 | 3.61 | 212 | 93% |
| Embodiment 43 | 15 | 3.65 | 213 | 72% |
| Embodiment 44 | 2 | 3.5 | 200 | 90% |

As can be seen from Embodiments 39 to 42 in Table 11, when the first positive electrode material is secondary particles and Dᵥ₅₀ is 4 µm to 13 µm, the 2C discharge capacity of the battery cell is greater than 93%. As can be seen from Embodiment 43, when Dᵥ₅₀ is 15 µm, the 2C discharge capacity of the battery cell is significantly lower. As can be seen from Embodiment 44, when Dᵥ₅₀ is less than 4 µm, the 2C discharge capacity of the battery cell is slightly lower.

### Setting the particle diameter when the second positive electrode material is single crystals

The parameters and test results of the battery cells in Embodiments 45 to 49 are shown in Table 12 and Table 13.

**Table 12**

| | Embodiment 45 | Embodiment 46 | Embodiment 47 | Embodiment 48 | Embodiment 49 |
|---|---|---|---|---|---|
| First positive electrode material | LiNi_{0.5}Co_{0.2}Mn_{0.3}O₂ | | | | |
| Second positive electrode material | LiFe_{0.5}Mn_{0.5}PO₄ | | | | |
| Number of first positive electrode plates | 5 | 5 | 5 | 5 | 5 |
| Number of second positive electrode plates | 5 | 5 | 5 | 5 | 5 |
| Coating areal density of first positive electrode material (g/m²) | 370 | 370 | 370 | 370 | 370 |
| Coating areal density of second positive electrode material (g/m²) | 450 | 450 | 450 | 450 | 450 |

**Table 13**

| | Dᵥ₅₀ of second positive electrode material (µm) | Powder compaction density under 3 tons (g/cm³) | Gravimetric capacity (mA·h/g) | 2C discharge capacity |
|---|---|---|---|---|
| Embodiment 45 | 0.2 | 2.27 | 133 | 79% |
| Embodiment 46 | 0.3 | 2.05 | 136 | 77% |
| Embodiment 47 | 0.5 | 1.95 | 140 | 75% |
| Embodiment 48 | 0.8 | 1.85 | 145 | 70% |
| Embodiment 49 | 2 | 1.7 | 150 | 65% |

As can be seen from Table 13, the 2C discharge capacity of the battery cell formed when the particle diameter of the second positive electrode material is less than 1 µm is superior to the 2C discharge capacity of the battery cell formed when the particle diameter of the second positive electrode material is greater than 1 µm.

Understandably, in the description of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of this application, but not intended to indicate or imply that the mentioned device or component must be located in the specified direction or constructed or operated in the specified direction. Therefore, such terms are not intended as a limitation on this application.

In addition, the technical terms such as "first" and "second" are used merely for ease of description, but not to indicate or imply relative importance or implicitly specify the number of technical features mentioned. Therefore, a feature defined with "first" or "second" may explicitly or implicitly include one or more of the features. In the description of this application, unless otherwise expressly specified, "a plurality of" means two or more.

In this application, unless otherwise expressly specified and defined, the terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or an interaction relationship between two components. A person of ordinary skill in the art is able to understand the specific meanings of the terms in this application according to specific situations.

In this application, unless otherwise expressly specified and qualified, a first feature being "on" or "under" a second feature may be that the first feature is in direct contact with the second feature, or the first feature is in indirect contact with the second feature through an intermediary. In addition, a first feature being "on", "above", or "over" a second feature may be that the first feature is exactly above or obliquely above the second feature, or simply that the first feature is at an altitude higher than the second feature. A first feature being "under", "below", or "beneath" a second feature may be that the first feature is exactly under or obliquely under the second feature, or simply that the first feature is at an altitude lower than the second feature.

In the context of this specification, reference to "one embodiment", "some embodiments", "one or more embodiments", "an embodiment", "specific example", "some examples", and the like means that a particular feature, structure, material, or characteristic described in connection with the embodiment or example is included in at least one embodiment or example of this application. In this embodiment, the appearances of such terms are not necessarily referring to the same embodiment or example. Furthermore, the particular features, structures, materials, or characteristics may be combined in any suitable manner in one or more embodiments. In addition, a person skilled in the art can integrate or combine different embodiments or examples as well as the features of different embodiments or examples described herein to the extent that they do not contradict each other.

Although the embodiments of this application have been shown and described above, it is understandable that the foregoing embodiments are exemplary but not intended as a limitation on this application. A person of ordinary skill in the art may make variations, modifications, substitutions, and derivations to the embodiments without departing from the scope of this application.

## Claims

1. A battery cell, wherein the battery cell comprises a positive electrode plate, and the positive electrode plate comprises:
a first positive electrode plate, wherein the first positive electrode plate comprises a first positive active layer, the first positive active layer comprises a first positive electrode material, and the first positive electrode material comprises a ternary material;
a second positive electrode plate, wherein the second positive electrode plate comprises a second positive active layer, the second positive active layer comprises a second positive electrode material, and the second positive electrode material comprises a lithium-containing phosphate; and
a negative electrode plate, wherein the negative electrode plate and the positive electrode plate are stacked up.

2. The battery cell according to claim 1, wherein a number of the first positive electrode plates is x₁, a number of the second positive electrode plates is x₂, a gravimetric capacity of each first positive electrode plate is a mA·h/g, and a gravimetric capacity of each second positive electrode plate is b mA·h/g, satisfying: 0.5 ≤ (b/a)² + x₁/(x₁ + x₂) ≤ 1.6.

3. The battery cell according to claim 2, wherein 0.01 ≤ x₁/x₂ ≤ 100.

4. The battery cell according to claim 3, wherein 150 mA·h/g ≤ a ≤ 230 mA·h/g; and/or 100 mA·h/g ≤ b ≤ 160 mA·h/g.

5. The battery cell according to any one of claims 1 to 4, wherein a coating areal density of the first positive electrode material on the first positive electrode plate is 80 g/m² to 600 g/m²; and/or
a coating areal density of the second positive electrode material on the second positive electrode plate is 80 g/m² to 600 g/m².

6. The battery cell according to any one of claims 1 to 5, wherein a compaction density of the first positive electrode plate is 2.0 g/cm³ to 4.3 g/cm³; and/or, a compaction density of the second positive electrode plate is 2.0 g/cm³ to 4.3 g/cm³.

7. The battery cell according to any one of claims 1 to 6, wherein the second positive electrode plate is disposed on an outermost layer of the battery cell.

8. The battery cell according to any one of claims 1 to 7, wherein the lithium-containing phosphate comprises Liₐ₁A_{b1}MP_{1-c1}C_{c1}O_{4-d1}D_{d1}, wherein A comprises one or more of Group IA elements; M comprises at least one of a Group VIIB element or a doping element of the Group VIIB element; C comprises one or more of a Group IIIA element, a Group IVA element, a Group VA element, or a Group VIA element; D comprises one or more of a Group VIA element or a Group VIIA element; a₁ is selected from 0.9 to 1.1; b₁ is selected from 0 to 0.1; c₁ is selected from 0 to 0.1; and d₁ is selected from 0 to 0.1.

9. The battery cell according to claim 8, wherein the lithium-containing phosphate comprises Liₐ₁A_{b1}Mn₁₋ₑ₁Eₑ₁P_{1-c1}C_{c1}O_{4-d1}D_{d1}, wherein A comprises one or more of Zn, Al, Na, K, Mg, Nb, Mo, or W; E comprises one or more of Zn, Al, Na, K, Mg, Mo, W, Ti, V, Zr, Fe, Ni, Mg, Co, Ga, Sn, Sb, Nb, or Ge; C comprises one or more of B (boron), S, Si, or N; D comprises one or more of S, F, Cl, or Br; a₁ is any value selected from 0.9 to 1.1; b₁ is any value selected from 0 to 0.100; c₁ is any value selected from 0.001 to 0.100; d₁ is any value selected from 0.001 to 0.1; and e₁ is any value selected from 0.001 to 0.5.

10. The battery cell according to claim 8 or 9, wherein the lithium-containing phosphate comprises Li₁₊ₓMn₁₋ₑ₁Eₑ₁P_{1-c1}C_{c1}O₄, wherein 1 + x = a₁, x is any value of - 0.100 to 0.100; e₁ is any value of 0.001 to 0.500; c₁ is any value of 0.001 to 0.100; E comprises one or more selected from Zn, Al, Na, K, Mg, Mo, W, Ti, V, Zr, Fe, Ni, Mg, Co, Ga, Sn, Sb, Nb, or Ge; and C comprises one or more selected from B (boron), S, Si, or N.

11. The battery cell according to any one of claims 1 to 10, wherein the second positive electrode material comprises a core and a shell that covers at least a part of a surface of the core, and the core comprises the lithium-containing phosphate.

12. The battery cell according to any one of claims 1 to 11, wherein the ternary material is Liₐ₂Ni_{b2}Co_{c2}M1_{d2}M2ₑ₂O_{f2}R'_{g2}, wherein: 0.75 ≤ a2 ≤ 1.2, 0 < b2 < 1, 0 < c2 < 1, 0 < d2 < 1, 0 ≤ e2 ≤ 0.2, 1 ≤ f2 ≤ 2.5, 0 ≤ g2 ≤ 1, f2 + g2 ≤ 3; M1 comprises Mn and/or Al; M2 comprises at least one of Zr, Zn, Cu, Cr, Mg, Fe, V, Ti, Sr, Sb, Y, W, or Nb; and R' comprises at least one of N, F, S, or Cl.

13. The battery cell according to claim 12, wherein the ternary material comprises at least one of lithium nickel cobalt aluminum oxide or lithium nickel cobalt manganese oxide.

14. The battery cell according to claim 13, wherein, based on a total mass of the first positive electrode plate, mass percentages of Ni and Co are:
Ni: 30% to 99.5%; and
Co: 3% to 49.5%.

15. The battery cell according to any one of claims 1 to 14, wherein the ternary material is a single crystal, and particle diameters of the single crystal are: 0.2 µm ≤ Dᵥ₅₀ ≤ 10 µm, and Dᵥ₉₉ ≤ 18 µm.

16. The battery cell according to any one of claims 1 to 15, wherein the ternary material is a secondary particle formed by agglomerating primary particles, a particle diameter of the primary particles is 50 nm to 800 nm, and particle diameters of the secondary particles are: 4 µm ≤ Dᵥ₅₀ ≤ 13 µm, and Dᵥ₉₉ ≤ 30 µm.

17. The battery cell according to any one of claims 1 to 16, wherein a BET specific surface area of the ternary material is 0.4 m²/g to 1.5 m²/g.

18. The battery cell according to any one of claims 1 to 17, wherein the second positive electrode material is a single crystal, and a particle diameter of the second positive electrode material is 50 nm to 1000 nm.

19. The battery cell according to any one of claims 1 to 18, wherein the second positive electrode material is a secondary particle formed by agglomerating primary particles, and particle diameters of the secondary particles are: 0.8 µm ≤ Dᵥ₅₀ ≤ 4.2 µm, and Dᵥ₉₉ ≤ 30 µm.

20. The battery cell according to any one of claims 1 to 19, wherein a BET specific surface area of the second positive electrode material is 8 m²/g to 2 m²/g.

21. A battery, wherein the battery comprises the battery cell according to any one of claims 1 to 20.

22. An electrical device, wherein the electrical device comprises the battery according to claim 21.
